(19) Europäisches Patentamt
European Patent Office
Office européen des brevets

(11) EP 4 578 838 A1

(12) EUROPEAN PATENT APPLICATION

(43) Date of publication:
02.07.2025 Bulletin 2025/27

(21) Application number: 24218829.0

(22) Date of filing: 10.12.2024

(51) International Patent Classification (IPC):
C03B 37/027 (2006.01)

(52) Cooperative Patent Classification (CPC):
C03B 37/02718; C03B 2205/61

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.12.2023 IN 202311089865

(71) Applicant: Sterlite Technologies Limited
Gurugram, Haryana 122102 (IN)

(72) Inventors:
• GAIKWAD, Sandeep
122102 Gurugram (IN)
• GHOSH, Sayantan
122102 Gurugram (IN)
• REDDY, Sudhakar, Dr.
122102 Gurugram (IN)

(74) Representative: Valet Patent Services Limited
c/o Caya 83713X
Am Börstig 5
96052 Bamberg (DE)

(54) METHOD TO COOL AN OPTICAL FIBER

(57) Disclosed is a method (600) for drawing an optical fiber (124) comprising step of melting a cylindrical glass preform (118) in a draw furnace (102) to obtain a bare optical fiber (120), cooling the bare optical fiber inside a cooling tube (106), supplying at least one inert gas inside the cooling tube (106) from at least one inlet port (208), recovering the at least one inert gas from at least one recovery port (214) that is positioned at an intermediate position along a longitudinal axis (218) of the cooling tube (106) and coating the cooled bare optical fiber (120) to obtain the optical fiber (124).

FIG. 1

EP 4 578 838 A1

## Description

### TECHNICAL FIELD

Embodiments of the present disclosure relate to the field of optical telecommunication systems, and more particularly, relate to a system to draw an optical fiber and a method thereof.

This application claims the benefit of Indian Application No. "IN202311089865" titled "SYSTEM AND METHOD TO DRAW OPTICAL FIBER" filed by the applicant on 29 December 2023, which is incorporated herein by reference in its entirety.

### Background Art

Modern optical devices and optical communications systems widely use fiber optic cables. Fiber optic cables are often used to transmit light signals for high speed data transmission. A fiber optic cable typically includes an optical fiber or optical fibers, a buffer or buffers that surround the fiber or fibers, a strength layer that surrounds the buffer or buffers, and an outer jacket. The optical fibers function to carry optical signals.

Optical fibers are widely used in optical cables. Optical fibers are usually drawn from a glass preform, which is a cylindrical body made up of glass. The optical fiber is then passed through one or more cooling stages for cooling the drawn optical fiber prior to applying coating on the drawn optical fiber. In general, the drawn optical fiber is passed through a cooling tube in presence of one or more gas or fluid to perform cooling of the drawn optical fiber. Studies have shown that lower part (usually 1/3rd of the length) of the cooling tube does not contribute much to cooling of the optical fiber as compared to the upper part (top 2/3rd of the length) of the cooling tube.

While there are various mechanisms to draw an optical fiber from a glass preform. Also, there are various references for cooling apparatus to cool bare optical fiber during the optical fiber draw process. The existing cooling apparatus lacks efficient sealing of the cooling apparatus and effective positioning of the recovery port in the cooling apparatus. This causes wastage of the inert gas that is supplied inside the cooling apparatus.

Prior art reference CN113772948A discloses an apparatus for cooling optical fiber in presence of helium gas.

Another prior art reference CN85101537A discloses a cooling apparatus that cools optical fiber in presence of helium and hydrogen. The cooling apparatus is sealed by a pipe at the bottom. However, conventional cooling apparatuses lack to manage unnecessary losses of inert gas. Hence a lot of inert gas is wasted which could be easily recovered and reused.

Therefore, there is a need for an efficient and effective system and method to draw an optical fiber that overcomes one or more limitations associated with the available optical fiber cables.

Thus, the present disclosure proposes a technical solution that overcomes the above-stated limitations in the prior arts by providing a method for drawing an optical fiber.

### SUMMARY OF THE DISCLOSURE

Embodiments of the present disclosure relates to a method for drawing an optical fiber comprising melting a cylindrical glass preform in a draw furnace to obtain a bare optical fiber, cooling the bare optical fiber inside a cooling tube, supplying at least one inert gas inside the cooling tube from the at least one inlet port, recovering the at least one inert gas from the at least one recovery port and coating the cooled bare optical fiber to obtain the optical fiber. The cooling tube comprises at least one inlet port and at least one recovery port. Further, at least one recovery port is positioned at an intermediate position along a longitudinal axis of the cooling tube. Furthermore, the intermediate position is above the bottom end and below a middle point of the cooling tube.

According to the first aspect of the present disclosure, the method prior to recovering, the at least one inert gas from the at least one recovery port further comprising choking the cooling tube by way of a choking device that is disposed at a bottom end of the cooling tube.

According to the second aspect of the present disclosure, the choking device comprises an exit portion such that a diameter of the exit portion is in a range of 2 millimeters (mm) to 4.9 mm. Moreover, the choking device has a longitudinal length that is in a range of 10 centimeters (cm) to 50 cm. Further, the choking device has a converging-diverging nozzle shape.

According to the third aspect of the present disclosure, while recovering the at least one inert gas from the at least one recovery port, at least 95% of the at least one inert gas is recovered from the at least one recovery port. Further, at least one recovery port is disposed at a bottom end of the cooling tube such that a ratio of a first distance to a second distance is greater than or equal to 1.5.

According to the fourth aspect of the present disclosure, the time difference between supplying at least one inert gas and recovering at least one inert gas is less than one second.

According to the fifth aspect of the present disclosure, upon choking and prior to recovering, the method further comprising generating, by way of by way of a suction device that is coupled to the at least one recovery port, a suction pressure in a range of -250 pascal to -5 pascal to suck the at least one inert gas.

According to the sixth aspect of the present disclosure, prior to cooling the bare optical fiber inside the cooling tube the method involves inserting the bare optical fiber from the top end of the cooling tube at a first temperature.

According to the seventh aspect of the present disclosure, upon coating the cooled bare optical fiber the method further involves extracting the optical fiber from the bottom end of the cooling tube at a second temperature. In particular, the second temperature is at least 60% less than the first temperature.

According to the eighth aspect of the present disclosure, a third distance is unequal to a fourth distance such that the third distance is at least two times of the fourth distance, where the third distance is a distance between the at least one input port and the at least one recovery port and the fourth distance is a distance between at least one outlet port and the at least one recovery port. The intermediate position is at least 50 mm above the bottom end of the cooling tube.

The foregoing objectives of the present disclosure are attained by providing a method for drawing an optical fiber

**BRIEF DESCRIPTION OF DRAWINGS**

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.

Fig. 1 is a pictorial snapshot illustrating a schematic view of an optical fiber drawing system in accordance with an embodiment of the present disclosure;
Fig. 2 is a pictorial snapshot illustrating a side view of a cooling tube of the optical fiber drawing system in accordance with an embodiment of the present disclosure;
Fig. 3 is a pictorial snapshot illustrating a side view of a cooling tube with a choking device of the optical fiber drawing system in accordance with another embodiment of the present disclosure;
Fig. 4 is a block diagram illustrating an intercooler device for recovering a gas in accordance with an embodiment of the present disclosure;
Fig. 5 is a block diagram illustrating recovery and recirculation unit of the optical fiber drawing system in accordance with an embodiment of the present disclosure;
Fig. 6 a flowchart illustrating a method for drawing the optical fiber in accordance with an embodiment of the present disclosure.

The optical fiber drawing system illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

**DESCRIPTION OF EMBODIMENTS**

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

**The following brief definition of terms shall apply throughout the present disclosure:**

Term "optical fiber" is referred to as a light guiding medium that provides highspeed data transmission. The optical fiber comprises one or more glass cores and one or more glass cladding layers. The light moving through the one or more glass cores of the optical fiber relies upon the principle of total internal reflection, where the one or more glass core has a higher refractive index than the refractive index of the cladding of the optical fiber. Further, the glass cladding of the optical fiber is coated with one or more coating layers to protect the glass part of the optical fiber.

The term "core" of an optical fiber as used herein is referred to as the one or more cylindrical structure present in the center or in a predefined lattice of the optical fiber that is configured to guide the light rays inside the optical fiber. In other words, the core may be defined as the inner most cylindrical structure that is present in the optical fiber and is configured to guide the light rays inside the optical fiber.

The term "cladding" of an optical fiber as used herein is referred to as one or more layered structure covering the core of an optical fiber from the outside that is configured to possess a lower refractive index than the refractive index of the core to facilitate total internal reflection of light rays inside the optical fiber. In other words, the cladding is defined as one or more layered structure covering the core of the optical fiber from the outside. The cladding is configured to possess a lower refractive index than the refractive index of the core to facilitate total internal reflection of light rays inside the optical fiber. Further, the cladding of the optical fiber may include an inner cladding layer coupled to the outer surface of the core of the optical fiber and an outer cladding layer coupled to the inner cladding from the outside.

The term "glass preform" as used herein refers to a solid cylindrical body made up of glass that is melted and drawn to form an optical fiber. The cylindrical glass preform is designed to have the desired refractive index profile for the optical fiber.

The term "draw furnace" as used herein is referred to as a high-temperature chamber used for melting the glass preform and drawing the optical fiber. To start the drawing, the glass preform is lowered into the furnace chamber. Generally, the drawing region is heated above 1,800° C, where the glass softens and elongates with a teardrop-shaped drip pulling the optical fiber downward.

The term "refractive index" as used herein refers to measure of change of speed of light from one medium to another medium for example vacuum. In other words, the refractive index may be particularly measured in reference to the speed of light in vacuum. The refractive index facilitates measurement of bending of light from one medium to another medium.

The term "refractive index profile" is also termed as a relative refractive index profile ($\Delta(r)$) of the optical fiber. The refractive index profile is referred to as the distribution of refractive indices in the optical fiber from the core to the outmost cladding layer of the optical fiber. Based on the refractive index profile, the optical fiber may be configured as a step index fiber. The refractive index of the core of the optical fiber is constant throughout the optical fiber and is higher than the refractive index of the cladding. Further, the optical fiber may be configured as a graded index fiber such that the refractive index of the core gradually varies as a function of the radial distance from the center of the core. The optical fiber may be of any type of optical fiber without deviating from the scope of the present disclosure.

The term "attenuation" is used to describe reduction in power of a light signal as it is transmitted. Specifically, the attenuation is caused by Rayleigh scattering, and absorption of the light signal.

The term "residence time" is time period between injection of an inert gas (helium) till a suction device initiates suction of mixture of the inert gas and air from the cooling tube. In an example, volume of the inert gas may be 10 m3 that may be injected into the cooling tube. In another example, the volume of the inert gas may be any value without deviating from the scope of the present disclosure.

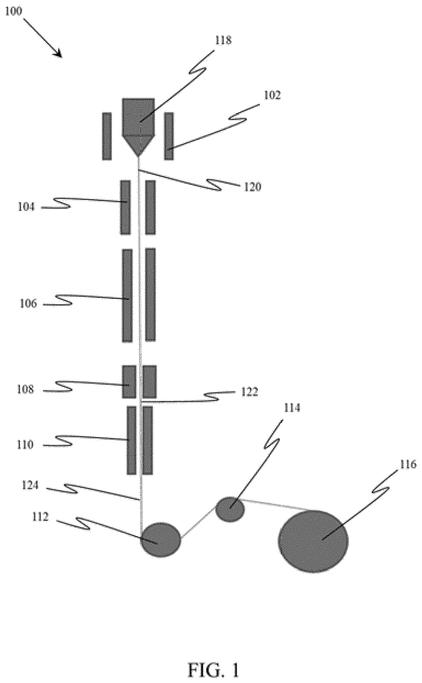

Fig. 1 is a pictorial snapshot illustrating a schematic view of an optical fiber drawing system in accordance with an embodiment of the present disclosure. The optical fiber drawing system 100 (hereinafter referred to and designated as "the system 100"). In particular, the system 100 may facilitate drawing an optical fiber from a glass preform and may enhance production rates of the optical fiber without increasing consumption of an inert gas (helium) in cooling tubes.

The system 100 may have a draw furnace 102, an annealing furnace 104, a cooling tube 106, a coating apparatus 108, a curing device 110, a capstan 112, an idler pulley 114, and a take up spool 116. In particular, the draw furnace 102 may be disposed at an upper side of the system 100 and may be adapted to receive a cylindrical glass preform 118 (hereinafter referred to and designated as "the glass preform 118"). Moreover, the draw furnace 102 may have a hollow chamber (not shown) that may be adapted to accept the glass preform 118. Specifically, the glass preform 118 may be inserted through a first cylindrical portion (not shown) of the hollow chamber such that the glass preform 118 ejects from a second cylindrical portion (not shown) of the hollow chamber. Further, the draw furnace 102 may be adapted to raise temperature of the glass preform 118 that facilitates melting of the glass preform 118. Upon melting, the glass preform 118 may facilitate generation of a bare optical fiber 120. The bare optical fiber 120 may be drawn from the draw furnace 102.

The annealing furnace 104 may be coupled to the draw furnace 102. In particular, the annealing furnace 104 may be disposed downstream of the draw furnace 102. In other words, the bare optical fiber 120 may be transferred from the draw furnace 102 to the annealing furnace 104. The annealing furnace 104 may be adapted to receive the bare optical fiber 120 from an upper end of the annealing furnace 104. Further, the annealing furnace 104 may be adapted to gradually lower the temperature of the bare optical fiber 120 and gradually cool the bare optical fiber 120 in one or more annealing stages. Specifically, the annealing furnace 104 may be adapted to lower an attenuation of the bare optical fiber 120 by lowering an effective temperature of the bare optical fiber 120.

In accordance with an embodiment of the present disclosure, the attenuation of the bare optical fiber 120 may be less than 0.32 Decibels (dB) at a wavelength of 1310 nanometers (nm).

In accordance with an embodiment of the present disclosure, the bare optical fiber 120 may have a diameter that may be in a range of 60 micrometer ($\mu$m) to 125 $\mu$m with tolerance of 1 $\mu$m. In some aspects of the present disclosure, the bare optical fiber may have the diameter of any value without deviating from the scope of the present disclosure.

The cooling tube 106 may be coupled to the annealing furnace 104 and disposed downstream of the annealing furnace 104. In other words, the bare optical fiber 120 may be transferred from the annealing furnace 104 to the cooling tube 106. The cooling tube 106 may be adapted to receive the bare optical fiber 120 that may be annealed by the annealing furnace 104. The cooling tube 106 may be adapted to lower the temperature of the bare optical fiber 120 after annealing the bare optical fiber 120. The cooling tube 106 may be adapted to cool down the bare optical fiber 120 by passing at least one cooling fluid or at least one inert gas through the cooling tube 106. Further, to cool down the bare optical fiber 120, the cooling tube 106 may facilitate contact of at least one cooling fluid or the at least one inert gas with the bare optical fiber 120. When at least one cooling fluid or at least one inert gas may come in contact with the bare optical fiber 120, the temperature of the bare optical fiber 120 is reduced. Thus, the at least one cooling fluid or the at least one inert gas may facilitate cooling of the bare optical fiber 120. The flow of the at least one cooling fluid or the at least one inert gas needs to be monitored or controlled inside the cooling tube 106 to avoid degradation of optical parameters of the bare optical fiber 120.

The amount and residence time of the at least one cooling fluid or the at least one inert gas injected inside the cooling tube 106 may be managed efficiently to control vibration and turbulence inside the cooling tube 106. If the vibration or turbulence inside the cooling tube 106 increases beyond a certain range, this may lead to breaking of the bare optical fiber 120. The controlled vibration and turbulence inside the cooling tube 106 is good for heat extraction from the bare optical fiber 120.

The coating apparatus 108 may be coupled to the cooling tube 106 and may be disposed downstream of the cooling tube 106. In particular, the bare optical fiber 120 may be transferred from the cooling tube 106 to the coating apparatus 108. Moreover, the coating apparatus 108 may have one or more coating devices (not shown) that are adapted to coat the bare optical fiber 120. In other words, the one or more coating devices may be adapted to apply a coating layer on the bare optical fiber 120. Further, the one or more coating devices may be adapted to coat the bare optical fiber 120 with one or more primary coating materials and one or more secondary coating materials to generate a coated optical fiber 122. The one or more primary coating materials and the one or more secondary coating materials may be adapted to protect the surface of the bare optical fiber 120. Thus, the one or more primary coating materials and the one or more secondary coating materials may advantageously facilitate the improvement of the strength of the bare optical fiber 120.

In accordance with an embodiment of the present disclosure, the one or more primary coating materials and the one or more secondary coating materials may be excellent in terms of heat resistance, cold resistance, and may demonstrate stable function over a wide temperature range. Thus, the one or more primary coating materials and the one or more secondary coating materials may protect the coated optical fiber 122 from cracks and thus makes the coated optical fiber 122 resistant to abrasion and scratches.

In accordance with an embodiment of the present disclosure, each of the one or more secondary coating materials may be a coloured secondary coating material.

In accordance with an embodiment of the present disclosure, the one or more primary coating materials and the one or more secondary coating materials may facilitate colour coding of the coated optical fiber 122.

The curing device 110 may be coupled to the coating apparatus 108 and may be disposed downstream of the coating apparatus 108. The coated optical fiber 122 may be transferred from the coating apparatus 108 to the curing device 110. The curing device 110 may be adapted to cure the coated optical fiber 122. Particularly, the curing device 110 may be adapted to cure the coated optical fiber 122 by way of an ultraviolet (UV) radiation. The curing device 110 may have an ultraviolet source, for example, an ultraviolet lamp or an ultraviolet light and/or an LED that may be adapted to produce the UV radiation. The UV radiation may facilitate curing the coated optical fiber 122 to obtain an optical fiber 124.

In accordance with an embodiment of the present disclosure, the optical fiber 124 may have a diameter that may be in a range of 150 micrometer ($\mu$m) to 250 $\mu$m. Alternatively, the optical fiber 124 may have a diameter of any value without deviating from the scope of the present disclosure. In some aspects of the present disclosure, the optical fiber 124 may be of any type without deviating from the scope of the present disclosure.

The capstan 112 may be coupled to the curing device 110 and may be disposed downstream of the curing device 110. The optical fiber 124 may be transferred from the curing device 110 to the capstan 112. In particular, the capstan 112 may be adapted to pull the bare optical fiber 120 from the glass preform 118. Further, the capstan 112 may be adapted to rotate that may facilitate to pull the bare optical fiber 120 from the bottom of the glass preform 118. Furthermore, the capstan 112 may be adapted to rotate by way of an external unit, for example, an electric motor.

In accordance with an embodiment of the present disclosure, the capstan 112 may be a flexible belt that may be partially wounded over a flat pulley such that the flat pulley is adapted to rotate. Upon rotation of the flat pulley, the capstan 112 may be adapted to pull the bare optical fiber 120 from the bottom of the glass preform 118.

The idler pulley 114 may be disposed adjacent to the capstan 112 and may be disposed downstream of the capstan 112. IThe optical fiber 124 may be transferred from the capstan 112 to the idler pulley 114. Further, the idler pulley 114 may be adapted to generate a desired winding tension in the optical fiber 124.

Although FIG. 1 shows a single idler pulley i.e., the idler pulley 114, however, aspects of the present disclosure are intended to include and/or otherwise cover any number of idler pulleys, without deviating from the scope of the present disclosure. In such a scenario, each idler pulley of the number of idler pulleys may be configurationally, functionally, and structurally the same or substantially similar to the idler pulley 114.

The take up spool 116 may be disposed adjacent to the idler pulley 114. In particular, the take up spool 116 may be disposed downstream of the take up spool 116. Moreover, the optical fiber 124 may be transferred from the idler pulley 114 to the take up spool 116. Further, the idler pulley 114 may be adapted to generate the desired winding tension in the optical fiber 124 while the optical fiber 124 is wound over the take up spool 116. Therefore, take up spool 116 may be adapted to collect the optical fiber 124.

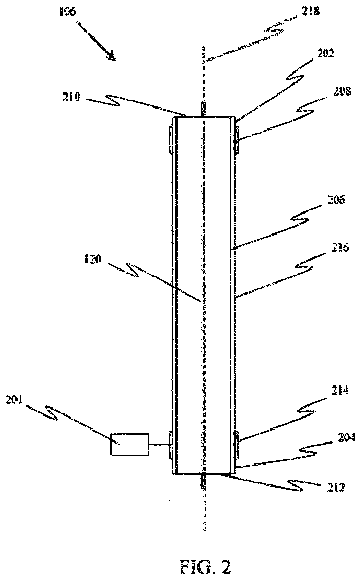

Fig. 2 is a pictorial snapshot illustrating a side view of a cooling tube of the optical fiber drawing system in accordance with an embodiment of the present disclosure. The system 100 may further have a suction device 201. The cooling tube 106 may have a top end 202, a bottom end 204, a body portion 206, at least one inlet port 208, an input port 210, an outlet port 212, and at least one recovery port 214.

The top end 202 may be disposed at an upper side of the cooling tube 106 and the bottom end 204 may be disposed at a lower side of the cooling tube 106. The cooling tube 106 may extend from the top end 202 to the bottom end 204. At least one inlet port 208 and the input port 210 may be disposed of at the top end 202. The outlet port 212 and the at least one recovery port 214 may be disposed of at the bottom end 204. At least one recovery port 214 may be disposed near the bottom end 204 that may enhance effectiveness of the cooling tube 106. The at least one recovery port 214 may be disposed at the bottom end 204 as the at least one inert gas absorbs maximum heat of the bare optical fiber 120 while the at least one inert gas reaches to the bottom end 204.

In accordance with an embodiment of the present disclosure, the cooling tube 106 may have more than one inlet ports at different intermediate positions along the longitudinal axis 218 of the cooling tube 106.

In accordance with an embodiment of the present disclosure, at least one recovery port 214 may be disposed anywhere between middle point 216 and the bottom end 204 along the longitudinal axis 218 of the cooling tube 106.

In one aspect of the present disclosure, more than one recovery port 214 may be disposed between the middle point 216 and the bottom end 204 along the longitudinal axis 218 of the cooling tube 106.

In an exemplary aspect of the present disclosure, when inert gas is injected via more than one inlet port 208, the cooling tube 106 may have more than one recovery port 218 to suck adequate flow of the inert gas relative to the supplied flow of the inert gas at the inlet ports 208.

In alternate aspects of the present disclosure, at least one recovery port 214 may be disposed of nearly at 2/3rd of a vertical length position of the cooling tube 106. This may effectively cool the at least one inert gas and may facilitate reinjecting the at least one inert gas back into the cooling tube 106. In some aspects of the present disclosure, the recovery of the inert gas may be started prior to the inert gas reaching the bottom end 204 of the cooling tube 106, because the inert gas becomes inefficient and may not contribute in cooling of the bare optical fiber 120 in the bottom region of the cooling tube 106.

In an exemplary aspect of the present disclosure, the cooling rate of the bare optical fiber 120 inside the cooling tube 106 may be very low in the bottom 1/4th region along the longitudinal axis 218 of the cooling tube 106 and the cooling rate of the bare optical fiber 120 inside the cooling tube 106 may be very high in the top 3/4th region along the longitudinal axis 218 of the cooling tube 106. In an exemplary aspect of the present disclosure, at least one recovery port 214 may be positioned at a 3/4th position along the longitudinal axis 218 of the total length of the cooling tube 106.

In one example, if the total length of cooling tube 106 is $x$ meters, the at least one recovery port 214 is positioned at $\frac{2X}{3}$ meters (m) from the top end 210 of the cooling tube 106. When the recovery port is positioned at $\frac{2X}{3}$ m from the top end 210 of the cooling tube 106, the inefficiency of heated inert gas in the bottom region of the cooling tube 106 may be avoided and the inert gas may be effectively recovered, cooled, and reinjected inside the cooling tube 106.

In accordance with an embodiment of the present disclosure, more than one recovery port 214 may be placed at an intermittent interval below the middle point 216 and bottom end 204 along the longitudinal axis 218 of the cooling tube 106. The more than one recovery port 214 placed at the intermittent interval may help in fast recovery and recirculation of the at least one inert gas inside the cooling tube 106.

In an example, if the total length of cooling tube 106 in longitudinal direction is $x$ meters (m), the at least one recovery port 214 may be positioned between $\frac{2x}{3}$ m to $\frac{x}{1000}$ m. In one more example, if the total length of cooling tube 106 in longitudinal direction is y meters (m), the at least one recovery port 214 may be positioned

between $\frac{2x}{3}$ m to $\frac{x}{100}$ m. In one example, if the total length of cooling tube 106 in longitudinal direction is y meters (m), the at least one recovery port 214 may be positioned between $\frac{2y}{3}$ m to $\frac{y}{50}$ m. In one example, if the total length of cooling tube 106 in longitudinal direction is y meters (m), the at least one recovery port 214 may be positioned between $\frac{2y}{3}$ m to $\frac{y}{10}$ m. The efficient positioning of one or more recovery port 214 is important to maintain tradeoff between effective utilization of the at least one inert gas as well as to avoid loss of the at least one inert gas from the exit portion of the cooling tube 106.

In accordance with an embodiment of the present disclosure, the cooling tube 106 may have any value of longitudinal length and any number of inlet ports 208 and any number of recovery ports 214 without deviating from the scope of the present disclosure.

The input port 210 may be adapted to accept the bare optical fiber 120 in the cooling tube 106 through the input port 210. In particular, the input port 210 may be adapted to accept the bare optical fiber 120 from the annealing furnace 104. Upon entrance of the bare optical fiber 120 in the cooling tube 106, at least one inert gas may be supplied in the cooling tube 106. Moreover, at least one inert gas may be supplied in the cooling tube 106 through the at least one inlet port 208. Further, at least one inert gas may be a helium gas. The at least one inert gas may be adapted to provide an inert environment inside the cooling tube 106. Specifically, the at least one inert gas may be adapted to provide the inert environment inside the cooling tube 106 while the cooling tube 106 lowers the temperature of the bare optical fiber 120. The at least one inert gas may advantageously avoid degradation of optical properties of the bare optical fiber 120. Specifically, the inert environment provided by the at least one inert gas may advantageously avoid degradation of the optical properties of the bare optical fiber 120. The at least one inert gas may advantageously avoid contact of the bare optical fiber 120 with walls of the cooling tube 106. Specifically, the inert environment provided by the at least one inert gas may advantageously avoid contact of the bare optical fiber 120 with walls of the cooling tube 106 while the bare optical fiber 120 is moved within the cooling tube 106. Thus, at least one inert gas may advantageously prevent breaking of the bare optical fiber 120. Specifically, at least one inert gas may advantageously prevent breaking of the bare optical fiber 120 while the bare optical fiber 120 is moved within the cooling tube 106 from the top end 202 to the bottom end 204.

The at least one inert gas may further facilitate the lowering of the temperature of the bare optical fiber 120. In other words, at least one inert gas may facilitate the cooling of the bare optical fiber 120. The cooling tube 106 may facilitate heat exchange between the at least one inert gas and the bare optical fiber 120. Particularly, at least one inert gas may absorb heat of the bare optical fiber 120 and thereby lower the temperature of the bare optical fiber 120. In response to absorption of heat of the bare optical fiber 120, temperature of at least one inert gas may be raised. The at least one inert gas may therefore become relatively hotter while exiting through the at least one recovery port 214.

In accordance with an embodiment of the present disclosure, the volume of at least one inert gas may be 10 m3. In other words, 10 m3 of the at least one inert gas may be supplied into the cooling tube 106. Alternatively, the volume of at least one inert gas may be decided based on the total length of the cooling tube 106.

In accordance with an embodiment of the present disclosure, the entire volume of the at least one inert gas may be supplied at once or the at least one inert gas may be supplied in plurality of stages via plurality of inlet ports 208 for effective cooling and efficient recovery.

The outlet port 212 may be adapted to dispense the bare optical fiber 120 by ejecting from the cooling tube 106 through the outlet port 212. The at least one recovery port 214 may facilitate the at least one inert gas. Further, the at least one recovery port 214 may facilitate the recovery of at least one inert gas when the at least one inert gas is supplied inside the cooling tube 106 through the at least one inlet port 208.

In accordance with an embodiment of the present disclosure, the at least one recovery port 214 may be positioned at an intermediate position along a longitudinal axis 218 of the cooling tube 106. The intermediate position along the longitudinal axis 218 is below a middle point 216 of the cooling tube 106. The intermediate position of the at least one recovery port 214 on the cooling tube 106 may facilitate the recovery of the at least one inert gas. If at least one recovery port 214 is placed exactly at a middle point 218 or above the middle point 218 of the cooling tube 106, the role of at least one inert gas may not be properly utilized in cooling of the bare optical fiber 120 and the cooling process becomes inefficient and more costly. In some aspects of the present disclosure, the intermediate position is at least 50 mm above the bottom end 212 of the cooling tube 106. In some aspects of the present disclosure, the intermediate position is at least 1/10th of the total length above the bottom end 212 of the cooling tube 106.

In accordance with an embodiment of the present disclosure, the at least one recovery port 214 may enhance production rates of the optical fiber 124 without increasing consumption of the at least one inert gas.

In accordance with an embodiment of the present disclosure, the at least one recovery port 214 may facilitate the recovery of at least 95% of the at least one inert gas from the at least one inert gas mixed with air inside the cooling tube.

The suction device 201 may be coupled to the cooling tube 106 and may be disposed at the at least one recovery port 214. The suction device 201 may be adapted to generate a suction pressure at the at least one recovery port 214. In particular, the suction device 201 may be adapted to generate the suction pressure at the at least one recovery port 214 to suck the at least one inert gas from the cooling tube 106. In response to the suction pressure, the at least one inert gas may be egressed or exit from the at least one recovery port 214. The at least one inert gas may be egressed or exit from the at least one recovery port 214 that may facilitate the at least one inert gas from the cooling tube 106. The suction pressure may not be exceeded or increased beyond a certain value to avoid vibrations in the bare optical fiber 120 while the bare optical fiber 120 is inserted inside the cooling tube 106.

In accordance with an embodiment of the present disclosure, while recovering the at least one inert gas from the at least one recovery port 214, at least 95% of the at least one inert gas may be recovered from the at least one recovery port 214.

In one aspect of the present disclosure, at least one recovery port 214 may be disposed at the bottom end 204 of the cooling tube 106 such that a ratio of a first distance to a second distance is greater than or equal to 1.5. The first distance may be a distance between the top end 202 of the cooling tube 106 and the at least one recovery port 214. The second distance may be a distance between the at least one recovery port 214 and the bottom end 204 of the cooling tube 106. The at least one recovery port 214 is not disposed parallel to the bottom end 204 because the role of inert gas in cooling the fiber in the bottom region is negligible and not efficient, so the inert gas may be recovered from an intermediate position along the longitudinal axis 218 of the cooling tube 106 and then reinjected after filtering and cooling of the inert gas. The intermediate position may be below the middle point 216 and significantly above the bottom end 204 of the cooling tube 106. If the recovery port 214 is placed parallel to the bottom end 204, the at least one inert gas may egress outside the cooling tube 106 and may lead to loss of the at least one inert gas.

In accordance with an embodiment of the present disclosure, a third distance may be unequal to a fourth distance. The third distance may be a distance between the at least one input port 210 and the at least one recovery port 214. The fourth distance may be a distance between the at least one outlet port 212 and the at least one recovery port 214. Further, the third distance may be at least two times the fourth distance.

In accordance with an embodiment of the present disclosure, the suction device 201 may be adapted to generate the suction pressure that may be in a range of -250 pascal to -5 pascal to suck the at least one inert gas. The suction pressure may be maintained between the disclosed range as per the present disclosure to avoid unnecessary suction of air from the outside environment or loss of at least one inert gas.

In accordance with an embodiment of the present disclosure, the suction device 201 may be any device that may create vacuum/negative pressure/suction at the at least one recovery port 214. For example, the suction device 201 may be a vacuum pump. Aspects of the present disclosure are intended to include and/or otherwise cover any type of the suction device 201, without deviating from the scope of the present disclosure.

In accordance with an embodiment of the present disclosure, a time difference between supplying of at least one inert gas in the cooling tube 106 and recovering of the at least one inert gas may be less than one second.

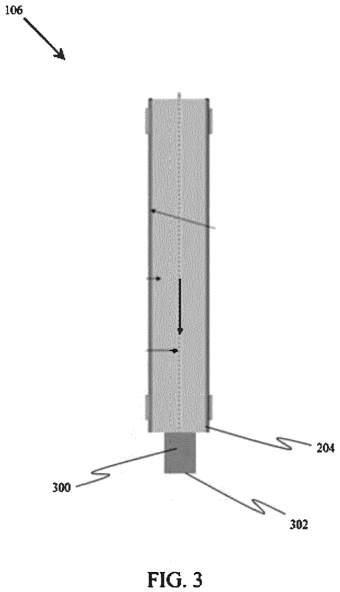

Fig. 3 is a pictorial snapshot illustrating a side view of a cooling tube with a choking device of the optical fiber drawing system in accordance with another embodiment of the present disclosure. The system 100 may further have the choking device 300. The choking device 300 may have an exit portion 302 and may be coupled to the cooling tube 106. Particularly, the choking device 300 may act as an auxiliary hardware that may be coupled to the cooling tube 106. Moreover, the choking device 300 may be disposed of at the bottom end 204 of the cooling tube 106. Further, the choking device 300 may be inserted from the outlet port 212 and may be adapted to choke the cooling tube 106. Furthemore, the choking device 300 may be adapted to choke the cooling tube 106 from the outlet port 212. The choking device 300 may be adapted to prevent disturbance from external air from entering the cooling tube 106 while the at least one inert gas maintains the inert environment inside the cooling tube 106. Therefore, choking device 300 may advantageously facilitate the recovery of a maximum amount of at least one inert gas. Since, the choking device 300 chokes the cooling tube 106 and prevents the entering of the external air into the cooling device 300, therefore, the choking device 300 advantageously facilitates to recover a higher percentage of the at least one inert gas at higher rates.

The exit portion 302 may be disposed at a bottom side of the choking device 300 and facilitate the bare optical fiber 120 to eject from the cooling tube 106 while the choking device 300 chokes the cooling tube 106 from the outlet port 212. Further, the choking device 300 may facilitate higher temperature drop across the length of the cooling tube 106.

In accordance with an embodiment of the present disclosure, the effective placement of the intermediate recovery port 214 along with the reduced exit diameter of the choking device 300 may help in achieving recovery of at least 95 percent of the inert gas supplied from the inlet port 208.

In accordance with an embodiment of the present disclosure, the choking device 300 may have a converging-diverging nozzle shape to facilitate non-contact centering of the bare optical fiber 120. Alternatively, the choking device 300 may have any other shape not limited to cube, nose cone, 3-d shape etc., without deviating from the scope of the disclosure.

In accordance with an embodiment of the present disclosure,the exit portion 302 may have a diameter that may be in a range of 2 millimeters (mm) to 4.9 mm. In particular, the opening diameter of the cooling tube 106 at the bottom end 212 is in a range of 8 mm to 10 mm. When suction of the inert gas at the at least one recovery port 214 is performed in absence of choking device 300 in the cooling tube 106, because of large opening at the bottom end 212 of the cooling tube 106, the suction device 201 may suck more amount of air from the outside environment form the opening of the bottom end 212. The exit portion 302 of the choking device has a reduced diameter (i.e., lesser diameter of opening at the bottom exit), the amount of air from the environment which get mixed with inert gas during suction is significantly reduced and recovered mixture at the recovery port 214 have higher purity of inert gas.

In some examples, 95% of the at least one inert gas may be recovered when the diameter of the exit portion 302 the choking device 300 is 2 mm.

In accordance with an embodiment of the present disclosure, effective positioning of the recovery port 214 at the intermediate position of the cooling tube 106 along with the reduced diameter of exit portion helps in achieving recovery of more than 95% of the at least one inert gas.

In an embodiment, 80% of the at least one inert gas may be recovered when the diameter of the exit portion 302 of the choking device 300 is 4 mm. Alternatively, less than 65% of the at least one inert gas may be recovered when the diameter of the exit portion 302 of the choking device 300 is 6 mm.

In alternative embodiment, about 43% of at least one inert gas may be recovered when the diameter of the exit portion 302 of the choking device 300 is 8 mm.

In alternative embodiment, about 40% of at least one inert gas may be recovered when the diameter of the exit portion 302 of the choking device 300 is 10 mm.

In accordance with an embodiment of the present disclosure, about 94% of the at least one inert gas may be recovered when the diameter of the exit portion 302 of the choking device 300 is 2 mm. Alternatively, 77% of the at least one inert gas may be recovered when the diameter of the exit portion 302 of the choking device 300 is 4 mm. Alternatively, 60% of the at least one inert gas may be recovered when the diameter of the exit portion 302 of the choking device 300 is 6 mm. Alternatively, about 52% of the at least one inert gas may be recovered when the diameter of the exit portion 302 of the choking device 300 is 8 mm and 10 mm. In some aspects of the present disclosure, a different combination of the diameter of exit portion 302 of the choking device 300 and the intermediate position of the recovery port 214 as per the present disclosure may achieve more than 95% recovery of the at least one inert gas.

In accordance with an embodiment of the present disclosure,the choking device 300 may have a longitudinal length that may be in a range of 10 centimeters (cm) to 50 cm. Alternatively, the choking device 300 may have the longitudinal length that may be in a range of 20 centimeters (cm) to 30 cm.

In accordance with an embodiment of the present disclosure, the choking device 300 may be made up of a material that may be compliant with the cooling tube 106.

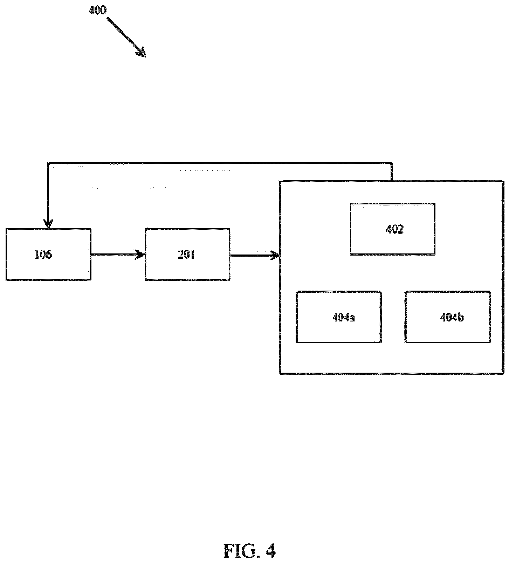

Fig. 4 is a block diagram illustrating an intercooler device for recovering a gas in accordance with an embodiment of the present disclosure. The block diagram 400 of the intercooler device 402 for recovering the at least one inert gas in the system 100. The system 100 may further have an intercooler device 402 with plurality of heat sinks 404a, 404b (hereinafter collectively referred to and designated as "the heat sinks 404"). The suction device 201 may generate the suction pressure at the at least one recovery port 214 to suck the at least one inert gas from the cooling tube 106. Thereby, suction device 201 may facilitate the transfer of at least one inert gas from the cooling tube 106 to the intercooler device 402. At least one inert gas may be passed through the intercooler device 402 and at least one inert gas may be passed through the heat sinks 404 that may facilitate heat exchange for the at least one inert gas. Moreover, the heat sinks 404 may be adapted to lower the temperature of the at least one inert gas that may be egressed from the at least one recovery port 214. At least one inert gas may be supplied back or injected back from the intercooler device 402 to the cooling tube 106. Further, the recovered at least one inert gas may be supplied back to the cooling tube 106 through the at least one inlet port 208. The intercooler device 402 may facilitate the thermodynamic potential of at least one inert gas (helium) to extract heat from the bare optical fiber 120 due to higher temperature gradients.

Since recovered and intercooled helium is re- injected to the cooling tube at lower temperature. Higher heat transfer rates for the same tube lengths. This may facilitate the full potential of the at least one inert gas that may enable enhanced heat transfer between the bare optical fiber 120 and the at least one inert gas inside the cooling tube 106.

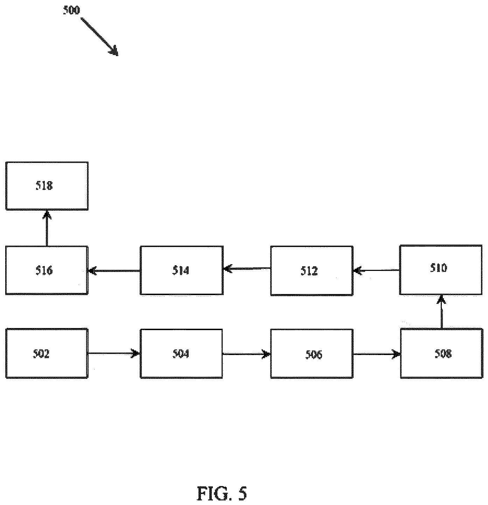

Fig. 5 is a block diagram illustrating the recovery and recirculation unit of the optical fiber drawing systemin accordance with an embodiment of the present disclosure. The system 100 may further have the recovery and recirculation unit 500 to recover and recirculate the at least one inert gas in the system 100.

The recovery and recirculation unit 500 may have a first purity sensor 502, a first flow meter 504, a moisture removal device 506, a first buffer tank 508, a second buffer tank 510, a second purity sensor 512, a non-flow return valve 514, a supply tank 516, and a second flow meter 518.In particular, the recovery and recirculation unit 500 may be adapted to receive a mixture of at least one inert gas and the air (hereinafter referred to as "mixture") from an inlet stream. Moreover, the recovery and recirculation unit 500 may be adapted to receive the mixture of the helium and the air from the inlet stream (hereinafter referred to as "mixture"). Further, the recovery and recirculation unit 500 may be adapted to receive the mixture of the helium, argon, and the air from the inlet stream Furthermore, the first purity sensor 502 may be adapted to receive the mixture from the inlet stream connected to the recovery port 214 of the cooling tube 106. The first purity sensor 502 may also be adapted to measure concentration and purity of the inert gas in the mixture.

The first flow meter 504 may be coupled to the first purity sensor 502. In particular, the first flow meter 504 may be disposed downstream of the first purity sensor 502. Moreover, the mixture may be transferred from the first purity sensor 502 to the first flow meter 504. Further, the first flow meter 504 may be adapted to measure flow of the mixture (in liters per minute) that may need to be taken from the cooling tube 106.

In accordance with an embodiment of the present disclosure, the flow of the mixture taken from the at least one recovery port 214 may include the same volume of the inert gas that may be injected from the at least one inlet port 208 of the cooling tube 106. Alternatively, the flow of the mixture taken from the at least one recovery port 214 may include less volume of the inert gas that may be injected from the at least one inlet port 208 of the cooling tube 106.

In accordance with an embodiment of the present disclosure, the moisture removal device 506 may be coupled to the first flow meter 504 and may be disposed downstream of the first flow meter 504. In particular, the mixture may be transferred from the first flow meter 504 to the moisture removal device 506. Further, the moisture removal device 506 may facilitate removing moisture from the mixture.

The first buffer tank 508 may be coupled to the moisture removal device 506. In particular, the first buffer tank 508 may be disposed downstream of the moisture removal device 506. Moreover, the mixture may be transferred from the moisture removal device 506 to the first buffer tank 508. The second buffer tank 510 may be coupled to the first buffer tank 508. Further, the second buffer tank 510 may be disposed downstream of the first buffer tank 508 and the mixture may be transferred from the second buffer tank 510 to the first buffer tank 508.

The first and second buffer tanks 508, 510 may have compressors, filters, and pressure sensors. The compressors may compress the mixture and the filters may remove impurities from the mixture (primarily air is removed from the mixture). Further, the pressure sensors may be configured to determine pressure of the mixture in the first and second buffer tanks 508, 510.

In accordance with an embodiment of the present disclosure, the first and second buffer tanks 508, 510 may facilitate filtering of the mixture in separate stages i.e., the first stage and the second stage. Particularly, the first buffer tank 508 may facilitate filtering the mixture in the first stage and the second buffer tank 510 may facilitate filtering the mixture in the second stage. Upon filtering of the mixture in the first and second stages, the filtered mixture (i.e., the inert gas such as helium) may be stored in the first and second buffer tanks, separately.

The second purity sensor 512 may be coupled to the second buffer tank 510. Particularly, the second purity sensor 512 may be disposed downstream of the second buffer tank 510. Moreover, the mixture may be transferred from the second buffer tank 510 to the second purity sensor 512 where the second purity sensor 512 may measure the purity and concentration of the helium in the mixture.

The non-flow return valve 514 may be coupled to the second purity sensor 512 and may be disposed downstream of the second purity sensor 512. In particular, the mixture may be transferred from the second purity sensor 512 to the non-flow return valve 514. Once sufficient amounts of the helium is separated, the non-flow return valve 514 may be opened to store the recovered helium in the supply tank 516, where cooling of the helium is done. Further, once the purity of helium is achieved, the non-flow return valve 514 may be opened to store the recovered helium in the supply tank 516. If the second purity sensor 512 detects the purity or concentration of helium is less (i.e., sufficient amount of air is still present in the mixture), the non-flow return valve 514 may remain closed and the mixture is recirculated back for purification and separation of air from the mixture.

The supply tank 516 may be coupled to the non-flow return valve 514. Particularly, the supply tank 516 may be disposed downstream of the non-flow return valve 514. And, the mixture may be transferred from the non-flow return valve 514 to the supply tank 516 to store and supply the recovered helium.

The second flow meter 518 may be coupled to the supply tank 516 and may be disposed downstream of the supply tank 516. In particular, the mixture may be transferred from the supply tank 516 to the second flow meter 518. Moreover, the second flow meter 518 may be adapted to measure the flow of the recovered helium that may be supplied back to the cooling tube.

Further, the flow monitoring at the first flow meter 504 is very crucial because if the flow is too high (suction of the mixture at high speed), then high vibrations may be produced inside the cooling tube 106. The high vibrations may subsequently lead to degradation of the optical properties of the bare optical fiber 120 or may cause the break of the bare optical fiber 120. If the flow is too low (suction of the mixture at low speed) may lead to loss of helium as the helium may go outside from the bottom end of the cooling tube 106.

Once the helium is cooled and ready for supply, the helium may be provided via an outlet stream to supply again in the cooling tube 106 with desired flow (in liter per minute). The recovered and recirculated helium that may be supplied back may have 99.99 percent concentration (i.e., purity) of the helium.

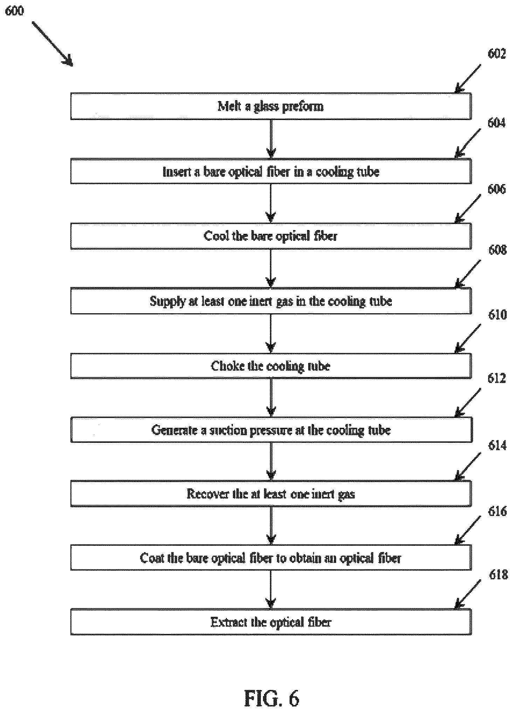

Fig. 6 a flowchart illustrating a method for drawing the optical fiber in accordance with an embodiment of the present disclosure. The method 600 may facilitate the efficient recovery of at least one inert gas such as helium from the cooling tube 106 while cooling of the optical fiber 124 during drawing of the optical fiber 124. The method 600 may have following steps for drawing the optical fiber 124 from the system 100.

At step 602, the glass preform 118, by way of the system 100, may be melted by way of the draw furnace 102 to obtain the bare optical fiber 120. The draw furnace 102 may be disposed at an upper side of the system 100 and may be adapted to receive a cylindrical glass preform 118 (hereinafter referred to and designated as "the glass preform 118"). The draw furnace 102 may have a hollow chamber (not shown) that may be adapted to accept the glass preform 118. Particularly, the glass preform 118 may be inserted through a first cylindrical portion (not shown) of the hollow chamber such that the glass preform 118 ejects from a second cylindrical portion (not shown) of the hollow chamber. Further, the draw furnace 102 may further be adapted to raise temperature of the glass preform 118 that facilitates melting of the glass preform 118. Upon melting the glass preform 118 may facilitate generation of the bare optical fiber 120. The bare optical fiber 120 may be drawn from the draw furnace 102.

At step 604, the bare optical fiber 120 may be inserted into the cooling tube 106 through the top end 202 of the cooling tube 106. Further, the bare optical fiber 120 may be inserted into the cooling tube 106 through the top end 202 at a first temperature.

At step 606, the bare optical fiber 120, by way of the system 100, may be cooled. Specifically, the bare optical fiber 120 may be cooled by way of the cooling tube 106. The cooling tube 106 may be coupled to the annealing furnace 104. Specifically, the cooling tube 106 may be disposed downstream of the annealing furnace 104 and the bare optical fiber 120 may be transferred from the annealing furnace 104 to the cooling tube 106. The cooling tube 106 may be adapted to receive the bare optical fiber 120 that may be annealed by the annealing furnace 104. The cooling tube 106 may be adapted to lower the temperature of the bare optical fiber 120. Moreover, the cooling tube 106 may be adapted to cool down the bare optical fiber 120 after annealing the bare optical fiber 120. The cooling tube 106 may be adapted to cool down the bare optical fiber 120 by passing at least one cooling fluid or at least one inert gas through the cooling tube 106. Further, to cool down the bare optical fiber 120, the cooling tube 106 may facilitate contact of at least one cooling fluid or the at least one inert gas with the bare optical fiber 120. In other words, when at least one cooling fluid or the at least one inert gas may come in contact with the bare optical fiber 120, the temperature of the bare optical fiber 120 is reduced. Thus, the at least one cooling fluid or the at least one inert gas may facilitate cooling of the bare optical fiber 120.

At step 608, at least one inert gas may be supplied in the cooling tube 106 through the at least one inlet port 208. Preferably, at least one inert gas may be a helium gas. The at least one inert gas may be adapted to provide an inert environment inside the cooling tube 106 and may be adapted to provide the inert environment inside the cooling tube 106 while the cooling tube 106 lowers the temperature of the bare optical fiber 120. The at least one inert gas may advantageously avoid degradation of optical properties of the bare optical fiber 120. Further, the inert environment provided by at least one inert gas may advantageously avoid degradation of the optical properties of the bare optical fiber 120. The at least one inert gas may advantageously avoid contact of the bare optical fiber 120 with walls of the cooling tube 106.

Specifically, the inert environment provided by the at least one inert gas may advantageously avoid contact of the bare optical fiber 120 with walls of the cooling tube 106 while the bare optical fiber 120 is moved within the cooling tube 106. Thus, at least one inert gas may advantageously prevent breaking of the bare optical fiber 120.

Further, at least one inert gas may advantageously prevent breaking of the bare optical fiber 120 while the bare optical fiber 120 is moved within the cooling tube 106 from the top end 202 to the bottom end 204. The at least one inert gas may facilitate the lowering of the temperature of the bare optical fiber 120 by extracting the heat from the bare optical fiber 120 and cooling the bare optical fiber 120. The cooling tube 106 may facilitate heat exchange between the at least one inert gas and the bare optical fiber 120. At least one inert gas may absorb heat of the bare optical fiber 120 and thereby lower the temperature of the bare optical fiber 120. In response to absorption of heat of the bare optical fiber 120, temperature of at least one inert gas may be raised. The at least one inert gas may therefore become relatively hotter while exiting through the at least one recovery port 214. If the at least one inert gas is not recovered, the at least one inert gas may egress from the bottom end 204 of the cooling tube 106.

At step 610, the cooling tube 106 may be choked. In particular, the cooling tube 106 may be choked by way of the choking device 300 that may act as an auxiliary hardware that may be coupled to the cooling tube 106. In particular, the choking device 300 may be disposed of at the bottom end 204 of the cooling tube 106. The choking device 300 may be inserted in the cooling tube 106. Moreover, the choking device 300 may be inserted from the outlet port 212. Further, the choking device 300 may be adapted to choke the cooling tube 106 from the outlet port 212. The choking device 300 may be adapted to prevent disturbance from the external air. Furthermore, the choking device 300 may prevent the external air from entering the cooling tube 106 while the at least one inert gas maintains the inert environment inside the cooling tube 106.

At step 612, the system 100 may be adapted to generate the suction pressure. The system 100, by way of the suction device 201, may be adapted to generate the suction pressure at the cooling tube 106 and may be disposed at the at least one recovery port 214. The suction device 201 may be adapted to generate the suction pressure at the at least one recovery port 214. Preferably, the suction device 201 may be adapted to generate the suction pressure at the at least one recovery port 214. Moreover, the suction device 201 may be adapted to generate the suction pressure at the at least one recovery port 214 to suck the at least one inert gas from the cooling tube 106. In response to the suction pressure, the at least one inert gas may be egressed or exit from the at least one recovery port 214. The at least one inert gas may be egressed or exit from the at least one recovery port 214 that may facilitate the at least one inert gas from the cooling tube 106. Further, the suction pressure may not be exceeded or increased beyond a certain value to avoid vibrations in the bare optical fiber 120 while the bare optical fiber 120 is inserted inside the cooling tube 106.

At step 614, at least one inert gas may be recovered from the system 100. Particularly, the at least one inert gas may be recovered from the at least one recovery port 214. The at least one recovery port 214 may facilitate at least one inert gas from the mixture (at least one inert gas and air) when the at least one inert gas is supplied inside the cooling tube 106 through the at least one inlet port 208. The air may enter inside the cooling tube 106 from the opening at the top end 202 of the cooling tube 106.

In some aspects of the present disclosure, at least one recovery port 214 may be positioned at the intermediate position along the longitudinal axis 218 of the cooling tube 106. The intermediate position may be below the middle point 216 and above the bottom end 204 of the cooling tube 106.

In some aspects of the present disclosure, the time difference between the step 608 and the step 614 may be less than one second. Particularly, the time difference between supplying at least one inert gas and recovering the at least one inert gas may be zero.

At step 616, the cooled bare optical fiber 120, by way of the system 100, may be coated to obtain the optical fiber 124. In particular, the cooled optical fiber may be coated by way of the coating apparatus 108 to obtain the optical fiber 124. The coating apparatus 108 may be coupled to the cooling tube 106. Moreover, the coating apparatus 108 may be disposed downstream of the cooling tube 106. Further, the bare optical fiber 120 may be transferred from the cooling tube 106 to the coating apparatus 108. The one or more coating devices may be adapted to apply a coating layer on the bare optical fiber 120. Furthemore, the one or more coating devices may be adapted to coat the bare optical fiber 120 with one or more primary coating materials and one or more secondary coating materials to generate a coated optical fiber 122.

The one or more primary coating materials and the one or more secondary coating materials may be adapted to protect the surface of the bare optical fiber 120. In particular, the one or more primary coating materials and the one or more secondary coating materials may advantageously facilitate the improvement of the strength of the bare optical fiber 120. Moreover, one or more primary coating materials and the one or more secondary coating materials may be excellent in terms of heat resistance, cold resistance, and may demonstrate stable function over a wide temperature range. Further, the one or more primary coating materials and the one or more secondary coating materials may protect the coated optical fiber 122 from cracks and thus makes the coated optical fiber 122 resistant to abrasion and scratches.

At step 618, the optical fiber 124 may be extracted. Particularly, the optical fiber 124 may be extracted from the bottom end 204 of the cooling tube 106 at a second temperature. Preferably, the second temperature may be less than the first temperature. Further, the second temperature may be at least 60% less than the first temperature.

Advantageously, the system 100 may enhance the speed of drawing of the optical fiber 124. In particular, the system 100 may advantageously facilitate the optical fiber 124 up to 20% higher speed as compared to the speed of drawing an optical fiber from conventional apparatus. Moreover, the system 100 may advantageously enhance recovery of at least one inert gas. Comparatively, the system 100 may advantageously recover at least 95 % of the at least one inert gas (i.e., helium) supplied via the inlet port 208. Further, the system 100 may advantageously eliminate losses while drawing the optical fiber 124.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

**Claims**

1. A method (600) for drawing an optical fiber (124) **characterized in that** steps of:

   melting a cylindrical glass preform (118) in a draw furnace (102) to obtain a bare optical fiber (120);
   cooling the bare optical fiber (120) inside a cooling tube (106), where the cooling tube (106) comprises at least one inlet port (208) and at least one recovery port (214);
   supplying at least one inert gas inside the cooling tube (106) from the at least one inlet port (208);
   recovering the at least one inert gas from the at least one recovery port (214), wherein the at least one recovery port (214) is positioned at an intermediate position along a longitudinal axis (218) of the cooling tube (106), wherein the intermediate position is above a bottom end (212) and below a middle point (216) of the cooling tube (106); and
   coating the cooled bare optical fiber (120) to obtain the optical fiber (124).

2. The method (600) of claim 1, wherein prior to recovering, the at least one inert gas from the at least one recovery port (214)the method further comprising choking the cooling tube (106) by way of a choking device (300) that is disposed at a bottom end (204) of the cooling tube (106).

3. The method (600) of claim 2, wherein the choking device (300) comprises an exit portion (302) such that a diameter of the exit portion (302) is in a range of 2 millimeters (mm) to 4.9 mm.

4. The method (600) of claim 2, wherein the choking device (300) has a longitudinal length that is in a range of 10 centimeters (cm) to 50 cm.

5. The method (600) of claim 2, wherein the choking device (300) has a converging-diverging nozzle shape.

6. The method (600) of claim 1, wherein while recovering the at least one inert gas from the at least one recovery port (214), at least 95% of the at least one inert gas is recovered from the at least one recovery port (214),

7. The method (600) of claim 1, wherein the at least one recovery port (214) is disposed at a bottom end (204) of the cooling tube (106) such that a ratio of a first distance to a second distance is greater than or equal to 1.5.

8. The method (600) of claim 1, wherein a time difference between supplying of the at least one inert gas and recovering of the at least one inert gas is less than one second.

9. The method (600) of claim 2, wherein upon choking and prior to recovering, the method (600)the method further comprising generating, by way of by way of a suction device (201) that is coupled to the at least one recovery port (214), a suction pressure in a range of -250 pascal to -5 pascal to suck the at least one inert gas.

10. The method (600) of claim 1, wherein prior to cooling the bare optical fiber (120) inside the cooling tube (106), the method (600) further comprising inserting the bare optical fiber (120) from a top end (202) of the cooling tube (106) at a first temperature.

11. The method (600) of claim 1, wherein upon coating the cooled bare optical fiber (120), the method (600) further comprising extracting the optical fiber (124) from a bottom end (204) of the cooling tube (106) at a second temperature.

12. The method (600) of claim 1, wherein the second temperature is at least 60% less than the first temperature.

13. The method (600) of claim 1, wherein a third distance is unequal to a fourth distance such that the third distance is at least two times of the fourth distance,

14. The method (600) of claim 1, wherein the third distance is a distance between the at least one input port (210) and the at least one recovery port (214) and the fourth distance is a distance between at least one outlet port (212) and the at least one recovery port (214).

15. The method (600) of claim 1, wherein the intermediate position is at least 50 mm above the bottom end (212) of the cooling tube (106).

FIG. 1

FIG. 2

FIG. 3

400

106 → 201 →

402

404a    404b

FIG. 4

FIG. 5

600

602

Melt a glass preform

604

Insert a bare optical fiber in a cooling tube

606

Cool the bare optical fiber

608

Supply at least one inert gas in the cooling tube

610

Choke the cooling tube

612

Generate a suction pressure at the cooling tube

614

Recover the at least one inert gas

616

Coat the bare optical fiber to obtain an optical fiber

618

Extract the optical fiber

FIG. 6

## EUROPEAN SEARCH REPORT

**Application Number**

EP 24 21 8829

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H11 116284 A (SUMITOMO ELECTRIC INDUSTRIES) 27 April 1999 (1999-04-27) * paragraphs [0003], [0014]; figure 1 * ----- | 1-15 | INV. C03B37/027 |
| X | US 2003/101773 A1 (LU YAPING [US] ET AL) 5 June 2003 (2003-06-05) * paragraphs [0002], [0048], [0054]; figure 2 * ----- | 1-15 | |

**TECHNICAL FIELDS SEARCHED (IPC)**

C03B

The present search report has been drawn up for all claims

| Place of search | Date of completion of the search | Examiner |
|---|---|---|
| The Hague | 25 April 2025 | Marrec, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 8829

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2025

| Patent document cited in search report | | Publication date | Patent family member(s) | | Publication date |
|---|---|---|---|---|---|
| JP H11116284 | A | 27-04-1999 | NONE | | |
| US 2003101773 | A1 | 05-06-2003 | AT | E412618 T1 | 15-11-2008 |
| | | | AU | 2002301395 B2 | 04-12-2008 |
| | | | BR | 0204905 A | 15-06-2004 |
| | | | CN | 1421410 A | 04-06-2003 |
| | | | EP | 1316535 A2 | 04-06-2003 |
| | | | JP | 2003192375 A | 09-07-2003 |
| | | | US | 2003101773 A1 | 05-06-2003 |
| | | | US | 2004216493 A1 | 04-11-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202311089865
- CN 113772948
- CN 85101537 A